# EUROPÄISCHE PATENTSCHRIFT

(11) **EP 1 242 781 B1**
(45) Veröffentlichungstag und Bekanntmachung des Hinweises auf die Patenterteilung: **15.10.2003**
(21) Anmeldenummer: 00987212.8
(22) Anmeldetag: 02.11.2000
(51) Int. Cl.: F27D 3/16, F27B 1/10

(54) **VERFAHREN ZUM BETREIBEN EINES SCHMELZOFENS**
METHOD FOR OPERATION OF A SMELTING FURNACE
PROCEDE D'UTILISATION D'UN FOUR DE FUSION

(30) Priorität: 12.11.1999 DE 19954556
(43) Veröffentlichungstag der Anmeldung: 25.09.2002
(73) Patentinhaber: Messer Griesheim GmbH, 65933 Frankfurt am Main (DE)
(72) Erfinder: HAMBERGER, Ralf, 47906 Kempen (DE)
(86) Internationale Anmeldenummer: EP0010803
(87) Internationale Veröffentlichungsnummer: WO01036891

(56) Entgegenhaltungen:
- EP-A- 0 491 325
- DD-A- 111 604
- DE-A- 19 646 802
- US-A- 5 571 307
- US-A- 5 946 340
- DATABASE WPI Week 8325 Derwent Publications Ltd., London, GB; AN 1984-157330 XP002168392 & SU 1 046 291 A (LEMC)

## Beschreibung

Die Erfindung betrifft ein Verfahren zum Betreiben eines Schmelzofens, indem Einsatzstoffe, Brennstoff, ein erstes Oxidationsmittel und ein zweites Oxidationsmittel einer Schmelzzone zugeführt werden, wobei mindestens das zweite Oxidationsmittel mittels mindestens eines Injektors mit Überschallgeschwindigkeit in die Schmelzzone eingedüst wird.

Ein derartiges Verfahren ist aus der DE-A1 196 46 802 bekannt. Bei dem darin beschriebenen Verfahren zum Betrieben eines Kupolofens werden im oberen Teil des Ofenschachtes die zu erschmelzenden metallischen Einsatzstoffe und als Energieträger Koks zugeführt. Im unteren Teil des Ofenschachtes wird zur Verbrennung des Energieträgers und zur Erzeugung einer heißen Schmelzzone Luft und zusätzlich Sauerstoff eingedüst Die Zufuhr von Sauerstoff erhöht die Temperatur in der Schmelzzone und steigert die Schmelzleistung des Kupolofens. Um die Eindringtiefe des Sauerstoffstromes zu erhöhen, wird dieser zusammen mit einem Brenngas mittels sogenannter Sauerstoff-Injektionslanzen mit Überschallgeschwindigkeit in die Schmelzzone eingedüst. Hierzu sind in die Sauerstoff-lnjektionslanzen jeweils Laval-Düsen eingesetzt.

Die Regelung der über eine Laval-Düse in die Schmelzzone eingebrachten Sauerstoffmenge ist jedoch problematisch. Aus physikalischen Gründen ist es nicht möglich, die Sauerstoffmenge herunterzuregeln, ohne die Strömungsgeschwindigkeit auf Schallgeschwindigkeit oder darunter zu drosseln. Dies führt dazu, daß die für den Betrieb eines bestimmten Schmelzofens vorher ausgelegte Bestückung mit Sauerstoff-lnjektionslanzen und der damit einhergehende Sauerstoffeintrag nicht verringert werden kann, ohne die Überschallgeschwindigkeit und damit deren Wirkung hinsichtlich der Eindringtiefe des Sauerstoffstromes aufzuheben. In der DE-A1 196 46 802 wird zur Lösung dieses Problems vorgeschlagen, je nach Betriebsbedingungen einzelne Sauerstoff-lnjektionslanzen zu- oder abzuschalten.

Diese Verfahrensweise kann jedoch zu einer unsymmetrischen Sauerstoffverteilung im Schmelzofen und damit zu einem inhomogenen Schmelzergebnis führen. Ein überflüssiges Eindüsen von Sauerstoff führt andererseits zu höheren Kosten und kann das Schmelzergebnis beeinträchtigen.

Der Erfindung liegt daher die Aufgabe zugrunde, ein Verfahren anzugeben, mittels dem der Schmelzbetrieb in einem Schmelzofen, insbesondere in einem Schachtofen, der mit mindestens einem Injektor zum Eindüsen eines Oxidationsmittels mit Überschallgeschwindigkeit ausgestattet ist, flexibel an die Erfordernisse angepaßt werden kann.

Diese Aufgabe wird ausgehend von dem eingangs beschriebenen Verfahren erfindungsgemäß dadurch gelöst, daß das Eindüsen des zweiten Oxidationsmittels während mindestens eines Verfahrensabschnittes pulsweise durch sich wiederholende zeitliche Abfolge einer Fließphase und einer Ruhephase erfolgt.

Erfindungsgemäß erfolgt während mindestens eines Verfahrensabschnittes das Eindüsen des zweiten Oxidationsmittels pulsweise. Dabei wird das zweite Oxidationsmittel während einer Fließphase mit Überschallgeschwindigkeit in die Schmelzzone eingedüst und während einer Ruhephase wird das Eindüsen auf eine Geschwindigkeit unterhalb von Überschallgeschwindigkeit gedrosselt oder zwischenzeitlich abgestellt. Fließphase und Ruhephase wechseln sich einander ab. Durch Anpassung der Dauer der Fließphase und der Ruhephase kann die für den aktuellen Schmelzbetrieb erforderliche Menge des zweiten Oxidationsmittels einfach angepaßt werden. Die Dauer der Fließphase unterscheidet sich im allgemeinen von der Dauer der Ruhephase. Es ist nicht erforderlich, die Ruhephase und Fließphase während des Verfahrensabschnittes zeitlich konstant zu halten. Der Einstellbereich für die Menge des in die Schmelzzone eingedüsten zweiten Oxidationsmittels bewegt sich zwischen Null (bei einer gegen Null gehenden Dauer der Fließphase) und der maximalen Auslegemenge des mindestens eines Injektors (bei einer gegen Null gehenden Dauer der Ruhephase). Somit läßt sich die Menge des in die Schmelzzone eingedüsten zweiten Oxidationsmittels in weitem Rahmen variieren, ohne daß der Injektor ganz abgeschaltet und somit auf die günstige Wirkung der Überschallgeschwindigkeit hinsichtlich der Eindringtiefe verzichtet werden muß.

Das erste Oxidationsmittel kann sich vom zweiten Oxidationsmittel unterscheiden. Der Eintrag des ersten Oxidationsmittels in die Schmelzzone erfolgt im allgemeinen zeitlich konstant; kann aber auch variiert werden.

Dadurch, daß das Eindüsen des zweiten Oxidationsmittels und damit die Schmelzleistung flexibel an die jeweiligen Schmelzbedingungen angepaßt werden können, wird ein hoher Nutzungsgrad der eingesetzten Energie erreicht. Dies trägt ebenso zur Vermeidung von Schadstoffen bei, wie auch die durch das erfindungsgemäße Verfahren ermöglichte vereinfachte und genauere Temperaturführung.

Besonders bewährt hat sich eine Verfahrensweise, bei der die zeitliche Abfolge von Fließphase und Ruhephase in Abhängigkeit von einer vorgegebenen Zuführmenge des zweiten Oxidationsmittels geregelt wird. Die erforderliche Zuführmenge des zweiten Oxidationsmittels wird beispielsweise als Volumen pro Zeiteinheit vorab ermittelt. Auf Basis der ermittelten Zuführmenge wird die Dauer der Fließphase und damit die Dauer der Ruhephase automatisch geregelt.

Vorteilhafterweise umfaßt die Gesamtdauer der Fließphase zwischen 5 % und 99 % der Dauer des Verfahrensabschnittes. Unter der Gesamtdauer wird hier die kumulierte Dauer der einzelnen Fließphasen verstanden. Besonders bevorzugt wird eine Fließphase, deren Gesamtdauer 50 % bis 95 % der Dauer des Verfahrensabschnittes umfaßt. Dadurch gelingt es, dem Schmelzofen bei einer Überdimensionierung hinsichtlich der Eintragskapazität für das zweite Oxidationsmittel, die für den wirtschaftlichen Betrieb erforderliche Menge an zweitem Oxidationsmittel weiterhin mit Überschallgeschwindigkeit zuzuführen, ohne daß der Injektor oder einer oder mehrere der Injektoren vollständig abgeschaltet werden müssen.

Es hat sich als günstig erwiesen, als zweites Oxidationsmittel technischen Sauerstoff einzusetzen. Technischer Sauerstoff führt insbesondere bei einem Eindüsen mit Überschallgeschwindigkeit zu einer hohen Schmelzleistung und einem - im Vergleich zu Luft - geringeren Staub- und Schadstoffanfall. Im Hinblick auf die Schmelzkosten hat es sich bewährt, als erstes Oxidationsmittel Luft einzusetzen.

Eine besonders große Eindringtiefe des zweiten Oxidationsmittets wird erreicht, wenn das Eindüsen mit Überschallgeschwindigkeit im Bereich von 1,5 bis 2,5 Mach erfolgt. Dadurch wird eine hohe Temperatur im Ofeninnern erzeugt und aufrechterhalten und Wärmeverluste über den Ofenmantel werden so minimiert.

Eine weitere Verbesserung des erfindungsgemäßen Verfahrens ergibt sich, wenn die Zufuhr des zweiten Oxidationsmittels zur Schmelzzone mittels einer Vielzahl von Sauerstoff-Injektoren erfolgt, die im Bereich der Schmelzzone um den Umfang des Schmelzofens gleichmäßig verteilt sind. Dadurch wird ein symmetrischer Eintrag des zweiten Oxidationsmittels in die Schmelzzone ermöglicht. Darüberhinaus können die Fließ- und Ruhephasen der einzelnen Sauerstoff-Injektoren aufeinander abgestimmt werden. So können die Fließphasen der einzelnen Sauerstoff-Injektoren beispielsweise synchron ablaufen, so daß in die Schmelzzone pulsweise das zweite Oxidationsmittel eingedüst wird. Die Fließphasen können aber auch asynchron geregelt werden, so daß sie beispielsweise bei den einzelnen Injektoren zeitlich versetzt nacheinander ablaufen. In diesem Fall wird die Schmelzzone gleichmäßiger mit dem zweiten Oxidationsmittel beaufschlagt. Ein vollständiges Abschalten einzelner Sauerstoff Injektoren ist beim erfindungsgemäßen Verfahren nicht erforderlich.

Das erfindungsgemäße Verfahren ist insbesondere für Schmelzprozesse geeignet, bei denen unter Verbrennung eines Brennstoffes mit einem Oxidationsmittel in einem Schmelzofen eine Schmelzzone erzeugt wird, in der ein Einsatzstoff erschmolzen wird. Hierfür kommen die Schachtöfen in Frage, insbesondere Kupolöfen, wie Heißwind-. Warmwind-, Kaltwind-, Sekundärwind-, Langzeit-, oder Wechselöfen. Das Einsatzmaterial wird dem Schmelzofen zum Beispiel in Form von Stahlschrott, Gußbruch, Roheisen oder Spänen zugegeben. Es werden auch nichtmetallische Zuschlagstoffe wie Koks, Sliziumcarbid, Ferrosilizium, Ferromangan, Kalk und Kies eingesetzt.

Nachfolgend wird die Erfindung anhand eines Ausführungsbeispiels näher erläutert:

In den oberen Teil des Schachts eines Kupolofens werden kontinuierlich Stahlschrott, Späne, Roheisen, Kreislaufmaterial und nichtmetallische Zuschlagstoffe wie Koks und Kalk zugegeben. Im unteren Bereich des Schachtes wird Luft - der sogenannte Ofenwind - über einen Windring und von dort in die Schmelzzone eingeführt. Die Zufuhrrate an Luft beträgt konstant 10 000 m³/h. Im unteren Teil des Ofenschachtes sind sechs, untereinander baugleiche Sauerstoff-lnjektionslanzen um die Schmelzzone gleichmäßig verteilt angeordnet. Mittels der Sauerstoff-lnjektionslanzen wird technischer Sauerstoff mit Überschallgeschwindigkeit in die Schmelzzone eingedüst Durch diese Eindüsung ergibt sich eine große Eindringtiefe des Sauerstoffstromes, so daß die Temperatur in der Schmelzzone erhöht und die Schmelzleistung des Kupolofens gesteigert wird. In die Sauerstoff-lnjektionslanzen sind jeweils Laval-Düsen eingesetzt. Die Sauerstoffzufuhr über die Sauerstoff lnjektionslanzen erfolgt pulsweise, durch eine sich wiederholende Sequenz von Fließphase und Ruhephase, wie dies nachfolgend anhand von Beispielen näher beschreiben wird:

### Beispiel 1:

Während der Fließphase beträgt die Strömungsgeschwindigkeit bei jedem der Sauerstoff-lnjektionslanzen Mach 2,0. Dabei wird in die Schmelzzone jeweils eine Sauerstoffmenge von 6 x 50 m³/h, also insgesamt 300 m³/h eingetragen. Um die Sauerstoffmenge zu drosseln, ohne daß gleichzeitig die Wirkung der Überschallgeschwindigkeit hinsichtlich der Eindringtiefe des Sauerstoffes verlorengeht, werden die sechs Sauerstoff-lnjektionslanzen kontinuierlich, geregelt und synchron einund abgeschaltet. Die Einschaltphase (Fließphase) dauert jeweils etwa 10 Sekunden, gefolgt von einer Ruhephase von 10 Sekunden. Die Gesamtdauer der Einschaltphase beträgt somit etwa 50% der Verfahrensdauer.

### Beispiel 2:

Während der Fließphase beträgt die Strömungsgeschwindigkeit bei jedem der Sauerstoff-lnjektionslanzen Mach 2,0. Dabei wird in die Schmelzzone eine Sauerstoffmenge von insgesamt 300 m³/h eingetragen. Um die Sauerstoffmenge zu drosseln, ohne daß gleichzeitig die Wirkung der Überschallgeschwindigkeit hinsichtlich der Eindringtiefe des Sauerstoffes verlorengeht, werden sich gegenübliegende Sauerstoff-lnjektionslanzen jeweils paarweise und in einem zeitlichen Versatz von 10 Sekunden nacheinander ein- und abgeschaltet Hierfür ist eine Regelung vorgesehen. Die Einschaltphase (Fließphase) bei jedem Injektorpaar dauert jeweils etwa 20 Sekunden, gefolgt von einer Ruhephase von 10 Sekunden. Die Gesamtdauer der Einschaltphase beträgt somit bei jedem der Sauerstoff-Injektionslanzen nur etwa 66 % der Verfahrensdauer.

### Beispiel 3:

Während der Fließphase beträgt die Strömungsgeschwindigkeit bei jedem der Sauerstoff-lnjektionslanzen Mach 2,0. Dabei wird in die Schmelzzone jeweils eine Sauerstoffmenge von 300 m³/h eingetragen. Um die Sauerstoffmenge zu drosseln, ohne daß gleichzeitig die Wirkung der Überschallgeschwindigkeit hinsichtlich der Eindringtiefe des Sauerstoffes verlorengeht, erfolgt die Sauerstoff-Zufuhr über die sechs Sauerstoff-lnjektionslanzen in einer sich wiederholenden zeitlichen Abfolge von Fließphase und Ruhephase. Die Fließphase dauert jeweils etwa 10 Sekunden, gefolgt von der Ruhephase von 20 Sekunden. Während der Ruhephase wird durch jede der Sauerstoff-lnjektionslanzen ein Sauerstoffstrom von ca. 10 m³ /h aufrechterhalten, der mit Schallgeschwindigkeit in die Schmelzzone eingeblasen wird.

## Patentansprüche

1. Verfahren zum Betreiben eines Schmelzofens, indem Einsatzstoffe, Brennstoff, ein erstes Oxidationsmittel und ein zweites Oxidationsmittel einer Schmelzzone zugeführt werden, wobei mindestens das zweite Oxidationsmittel mit Überschallgeschwindigkeit in die Schmelzzone eingedüst wird, **dadurch gekennzeichnet, daß** das Eindüsen des zweiten Oxidationsmittels während mindestens eines Verfahrensabschnittes pulsweise durch sich wiederholende zeitliche Abfolge einer Fließphase und einer Ruhephase erfolgt.

2. Verfahren nach Anspruch 1, **dadurch gekennzeichnet, daß** die zeitliche Abfolge von Fließphase und Ruhephase in Abhängigkeit von einer vorgegebenen Zuführmenge des zweiten Oxidationsmittels geregelt wird.

3. Verfahren nach Anspruch 1 oder 2, **dadurch gekennzeichnet, daß** die Gesamtdauer der Fließphase zwischen 5 % und 99 % der Dauer des Verfahrensabschnittes umfaßt.

4. Verfahren nach Anspruch 3, **dadurch gekennzeichnet, daß** die Gesamtdauer der Fließphase zwischen 50 % und 95 % der Dauer des Verfahrensabschnittes umfaßt.

5. Verfahren nach einem der vorhergehenden Ansprüche, **dadurch gekennzeichnet, daß** als zweites Oxidationsmittel technischer Sauerstoff eingesetzt wird.

6. Verfahren nach einem der vorhergehenden Ansprüche, **dadurch gekennzeichnet, daß** als erstes Oxidationsmittel Luft eingesetzt wird.

7. Verfahren nach einem der vorhergehenden Ansprüche, **dadurch gekennzeichnet, daß** das Eindüsen des zweiten Oxidationsmittels mit Überschallgeschwindigkeit im Bereich von 1,5 bis 2,5 Mach erfolgt.

8. Verfahren nach einem der vorhergehenden Ansprüche, **dadurch gekennzeichnet, daß** die Zufuhr des zweiten Oxidationsmittels zur Schmelzzone mittels einer Vielzahl von Sauerstofflanzen erfolgt, die im Bereich der Schmelzzone um den Umfang des Schmelzofens gleichmäßig verteilt sind.

## Claims

1. Method for operating a melting furnace, wherein charge materials, fuel, a first oxidizing agent and a second oxidizing agent are fed to a melting zone, at least the second oxidizing agent being injected into the melting zone at supersonic speed, **characterized in that** the injection of the second oxidizing agent, at least during one method section, is injected in pulsed fashion as a result of a sequence of a flow phase and a rest phase which is repeated over the course of time.

2. Method according to Claim 1, **characterized in that** the temporal sequence of flow phase and rest phase is controlled as a function of a predetermined supply quantity of the second oxidizing agent.

3. Method according to Claim 1 or 2, **characterized in that** the total duration of the flow phase comprises between 5% and 99% of the duration of the method section.

4. Method according to Claim 3, **characterized in that** the total duration of the flow phase comprises between 50% and 95% of the duration of the method section.

5. Method according to one of the preceding claims, **characterized in that** the second oxidizing agent used is technical-grade oxygen.

6. Method according to one of the preceding claims, **characterized in that** the first oxidizing agent used is air.

7. Method according to one of the preceding claims, **characterized in that** the injection of the second oxidizing agent at supersonic speed takes place at speeds in the range from Mach 1.5 to Mach 2.5.

8. Method according to one of the preceding claims, **characterized in that** the second oxidizing agent is fed to the melting zone by means of a multiplicity of oxygen lances which are distributed uniformly around the periphery of the melting furnace in the region of the melting zone.

## Revendications

1. Procédé pour l'exploitation d'un four de fusion, en ce que des matières de charge, du combustible, un premier moyen d'oxydation et un second moyen d'oxydation sont amenés à une zone de fusion, dans lequel au moins le second moyen d'oxydation est injecté à la vitesse supersonique dans la zone de fusion,
**caractérisé en ce que**
l'injection du second moyen d'oxydation a lieu pendant au moins un stade du procédé, par impulsions, par la séquence temporelle répétitive d'une phase d'écoulement et d'une phase de repos.

2. Procédé selon la revendication 1,
**caractérisé en ce que**
la séquence temporelle de la phase d'écoulement et de la phase de repos est régulée en fonction d'une quantité d'amenée prédéterminée du second moyen d'oxydation.

3. Procédé selon la revendication 1 ou 2,
**caractérisé en ce que**
la durée totale de la phase d'écoulement comprend entre 5 % et 99 % de la durée du stade du procédé.

4. Procédé selon la revendication 3,
**caractérisé en ce que**
la durée totale de la phase d'écoulement comprend entre 50 % et 95 % de la durée du stade du procédé.

5. Procédé selon l'une des revendications précédentes,
**caractérisé en ce que**
de l'oxygène technique est utilisé comme second moyen d'oxydation.

6. Procédé selon l'une des revendications précédentes,
**caractérisé en ce que**
de l'air est utilisé comme premier moyen d'oxydation.

7. Procédé selon l'une des revendications précédentes,
**caractérisé en ce que**
l'injection du second moyen d'oxydation est effectuée à la vitesse supersonique dans la gamme de 1,5 à 2,5 Mach.

8. Procédé selon l'une des revendications précédentes,
**caractérisé en ce que**
l'amenée du second moyen d'oxydation à la zone de fusion est effectuée au moyen d'une pluralité d'injecteurs d'oxygène qui sont répartis régulièrement, dans le domaine de la zone de fusion, sur la circonférence du four de fusion.
